Europäisches Patentamt

European Patent Office

Office européen des brevets

(19)

(11) Veröffentlichungsnummer: **0 067 804**

**B1**

(12)

# EUROPÄISCHE PATENTSCHRIFT

(45) Veröffentlichungstag der Patentschrift:
15.01.86

(51) Int. Cl.⁴: **G 01 P 3/489**

(21) Anmeldenummer: **82890063.9**

(22) Anmeldetag: **30.04.82**

(54) **Verfahren und Vorrichtung zur Messung der Drehzahl von Brennkraftmaschinen.**

(30) Priorität: **12.06.81 AT 2641/81**

(43) Veröffentlichungstag der Anmeldung:
**22.12.82 Patentblatt 82/51**

(45) Bekanntmachung des Hinweises auf die Patenterteilung:
**15.01.86 Patentblatt 86/3**

(84) Benannte Vertragsstaaten:
**AT DE FR GB**

(56) Entgegenhaltungen:
**FR-A-1 567 026**
**FR-A-2 301 692**
**GB-A-2 028 557**
**US-A-4 055 993**

**RESEARCH DISCLOSURE, August 1977, Nr. 160,
Seite 62, Havant Hants, G.B., Zusammenfassung
Nr. 16052, "Engine cylinder combustion
performance sensor"**

(73) Patentinhaber: **Friedmann & Maier
Aktiengesellschaft, Friedmannstrasse 7, A-5400
Hallein bei Salzburg (AT)**

(72) Erfinder: **Brasseur, Georg, Dipl.- Ing., Elsslergasse
20, A-1130 Wien (AT)**

(74) Vertreter: **Kretschmer, Adolf, Dipl.- Ing.,
Schottengasse 3a, A-1014 Wien (AT)**

## Beschreibung

Die Erfindung betrifft ein Verfahren und eine Vorrichtung zur Messung der Drehzahl von Brennkraftmaschinen, insbesondere von mehrzylindrigen Dieselmotoren, bei welchem die Drehzahl durch einen Geber von der Kurbelwelle oder einem mit dieser verbundenen Teil abgegriffen wird, für die nachfolgende elektronische Regelung von Einflußgrößen, wie z.B. Brennstoffmengenverstellung oder Einspritzzeitpunktverstellung, in Abhängigkeit von der Drehzahl.

Die Winkelgeschwindigkeit bzw. der Momentanwert der Drehzahl der Kurbelwelle einer Brennkraftmaschine ist auf Grund ihrer Arbeitsweise nicht gleichförmig, sondern über eine Umdrehung gewissen Schwankungen unterworfen. Bei der digitalen Messung der Drehzahl wurde bisher so vorgegangen, daß entweder der in der Zeiteinheit überstrichene Winkel oder die Zeit für das Überstreichen eines bestimmten Winkels gemessen wurde. Dieser Winkel kann beispielsweise durch die Anzahl der Zähne des Schwungrades und somit durch seine proportionale Impulszahl gegeben sein. Bei der bisher üblichen Drehzahlerfassung ergeben sich unter anderem folgende Probleme:

Durch Erfassung des Drehwinkels in der Zeiteinheit ist zwar eine rasche und genaue Bestimmung des Momentanwertes der Drehzahl möglich, jedoch ist dieser Momentanwert nicht charakteristisch für den Mittelwert der Drehzahl.

Durch Messung der für das Überstreichen eines vorbestimmten Winkels, im einfachsten Fall 360°, erforderlichen Zeit als Grundlage für die Drehzahlermittlung ist zwar bei hohen Drehzahlen die für eine schnelle Regelung benötigte Meßzeit hinreichend kurz, wogegen bei niedrigen Drehzahlen die erforderliche Meßzeit verhältnismäßig hoch wird. Dies bedingt insbesondere im Bereich der Leerlaufdrehzahl einer Brennkraftmaschine eine wesentliche Verschlechterung der Regeldynamik.

Ein Verfahren und eine Vorrichtung der eingangs angegebenen Art finden gemäß der FR-A-2 301 692 Anwendung für die Gewinnung einer die Annäherung an eine vorgegebene Magerlaufgrenze angebenden Meßgröße beim Betrieb einer Brennkraftmaschine, zu welchem Zweck während einer Umdrehung der Kurbelwelle mindestens bei zwei verschiedenen Winkelstellungen derselben die Winkelgeschwindigkeit gemessen und die Differenz der Meßwerte gebildet wird. Bei Gemischabmagerung nimmt die Laufunruhe der Brennkraftmaschine merklich zu, weswegen ein Betrieb mit einem Gemisch mit Luftüberschuß vermieden werden soll. Auf Grund der für eine Kolbenmaschine charakteristischen Laufungleichförmigkeit gibt es Extremwerte der Winkelgeschwindigkeit bei bestimmten Winkelstellungen der Kurbelwelle und an solchen Stellen, u.zw. für ein Maximum und für ein Minimum, sind Markierungen an der Kurbelwelle, oder an einem mit dieser verbundenen Teil angebracht, welche mit einem feststehenden Geber zusammenwirken. Die Markierungen können sich beispielsweise in Umfangsrichtung über drei Zahnteilungen des Anlasserzahnkranzes erstrecken. Durch die bei Abmagerung des Gemisches hinzukommende Laufunruhe wird die Phasenlage der normalen Laufungleichförmigkeitskurve gestört und durch Differenzbildung der gemessenen Extremwerte läßt sich eine derartige Störung feststellen. Eine Bestimmung der wahren Mittelwerte der Drehzahl ist nach dem bekannten Verfahren bzw. mit der bekannten Vorrichtung nicht möglich.

Aus der GB-A-2 028 557 ist eine elektronische Vorrichtung zur Drehzahlmessung bekannt, wobei an einem rotierenden Bauteil drei Markierungen in vorbestimmten, jedoch hinsichtlich ihrer absoluten Größe nicht näher definierten Winkeln angeordnet sind, welche mit wenigstens einem Geber zusammenwirken. Für den Fall der Verwendung mehrerer Geber ist über deren örtliche Anordnung nichts ausgesagt. Welche Maßnahmen bei einem eine periodische Laufungleichförmigkeit aufweisenden rotierenden Bauteil zur Ermöglichung der Bestimmung des wahren Mittelwertes der Drehzahl zu treffen sind, geht aus diesem bekannten Vorschlag ebenfalls nicht hervor.

Schließlich ist es aus der US-A-4 055 993 bekannt, für die Bestimmung eines Drehzahlprofils eines Motors über eine volle Umdrehung der Kurbelwelle verteilt jeweils in kleinen Teilbereichen der vollen Umdrehung Momentanwerte der Drehzahl zu ermitteln. Eine Berechnung der mittleren Drehzahl durch Mittelwertbildung auf elektronischem Wege aus einer größeren Anzahl von aufeinanderfolgend gemessenen Momentanwerten der Drehzahl bzw. Winkelgeschwindigkeit wäre zwar technisch möglich, würde aber einen unverhältnismäßig hohen Bauteileaufwand erfordern, so daß für letzteren Zweck nach einem anderen Lösungsweg zu suchen war.

Die Erfindung zielt darauf ab, innerhalb des gesamten Drehzahlbereiches einer Brennkraftmaschine eine möglichst rasche Ermittlung eines charakteristischen Drehzahlwertes, u.zw. eines dem Mittelwert der Drehzahl entsprechenden Meßwertes zu ermöglichen.

Das erfindungsgemäße Verfahren ist im Patentanspruch 1 angegeben. Zur Ermittlung der Drehzahl wird ein Zeitintervall erfaßt, in welchem sich die Kurbelwelle der Brennkraftmaschine um einen Winkel von 360° (Zweitaktmotor) oder 720° (Viertaktmotor), dividiert durch die Zylinderanzahl, verdreht.

Eine weitere Aüsgestaltung des Verfahrens ist im Patentanspruch 2 angegeben.

Bei der Erfassung eines solchen Zeitintervalles ist keine Zuordnung von Meßbeginn und Kurbelwellenstellung erforderlich und es wird stets der Mittelwert der Drehzahl gemessen.

Das erfindungsgemäße Verfahren zur Drehzahlmessung erlaubt die Auswertung des Beitrages des Arbeitstaktes jedes einzelnen Zylinders einer mehrzylindrigen Brennkraftmaschine und durch Auswertung der Drehzahlmessung eine sehr schnelle Regelung der Brennkraftmaschine. Eine schnelle Regelung ist für alle Betriebszustände der Brennkraftmaschine wertvoll, unter anderem auch für die Leerlaufregelung. Da durch die Anwendung der Erfindung beispielsweise bei einem mehrzylindrigen Dieselmotor praktisch während des Arbeitstaktes eines Zylinders bereits die Einspritzmenge für den Arbeitstakt des nächstfolgenden Zylinders dosiert werden kann, läßt sich die Leerlaufdrehzahl auf sehr niedrige Werte einstellen, was im Sinne einer Treibstoffersparnis und Verminderung der Umweltverschmutzung für den Betrieb von Kraftfahrzeugen im Stadtverkehr mit einem hohen Anteil von Leerlaufzeiten des Motors von Bedeutung ist.

Eine Vorrichtung zur Durchführung des erfindungsgemäßen Verfahrens ist im Patentanspruch 3 angegeben. Mit einer in solcher Weise ausgebildeten Vorrichtung läßt sich die Drehzahl der Brennkraftmaschine in üblicher Weise, beispielsweise durch Auswerten des Zeitintervalles für den Durchgang zweier einander zugeordneter Markierungen, bestimmen, wobei die Drehzahl dem Zeitintervall umgekehrt proportional ist.

Zweckmäßig sind wenigstens zwei Geber im gleichen Winkelabstand wie zwei einander zugeordnete Markierungen über den Umfang der Kurbelwelle verteilt angeordnet. Hierbei kann mit Hilfe einer Koinzidenzschaltung für die von den Gebern abgegebenen Signale die den Beginn und die das Ende eines Meßintervalles signalisierende Markierung erkannt werden.

In der Zeichnung ist die Erfindung an Hand eines Diagrammes (Fig. 1) und zweier Ausführungsbeispiele der Vorrichtung (Fig. 2 und 3) näher erläutert.

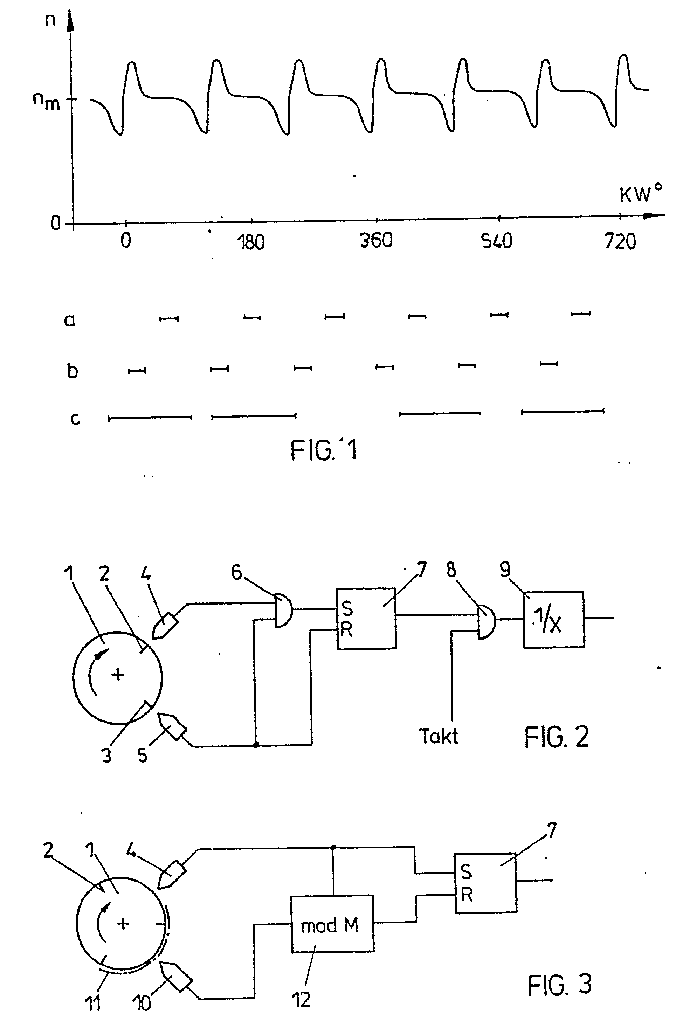

Fig. 1 zeigt in einem Diagramm die Ungleichförmigkeit der Drehzahl einer Sechszylinder-Viertakt-Brennkraftmaschine. In den Zeilen a, b und c der Fig. 1 sind prinzipielle Meßmöglichkeiten angegeben. Zeile a zeigt die mit dem Umlauf der Kurbelwelle der Brennkraftmaschine synchrone Messung der Drehzahl über jeweils nur einen Teilbereich der sich aus dem Quotienten des für einen vollständigen Arbeitszyklus eines Zylinders durchlaufenen Winkels durch die Anzahl der Zylinder ergebenden Winkels, wobei dieser Teilbereich an einer Stelle liegt, wo der Momentanwert der Drehzahl nahezu der mittleren Drehzahl $n_m$ entspricht. Diese Stelle liegt aber nicht über dem gesamten Drehzahlbereich beim gleichen Kurbelwellenwinkel und es würden daher bei dieser Methode Meßfehler auftreten. Ähnliches gilt auch für die Messung gemäß Zeile b, wobei der Teilbereich der Kurbelwellendrehung, innerhalb dessen die Drehzahl bestimmt wird, an einer Stelle liegt, wo der gemessene Momentanwert nicht mit der mittleren Drehzahl übereinstimmt.

Bei der erfindungsgemäßen Art der Ermittlung des wahren Wertes der Drehzahl innerhalb der jeweils kürzestmöglichen Meßzeit kann gemäß Zeile c bei beliebigen Stellungen der Kurbelwelle mit der Messung begonnen werden. Erfolgt nämlich die Messung über den gesamten Bereich des Winkels, welcher dem Quotienten des für einen vollständigen Arbeitszyklus eines Zylinders durchlaufenen Winkels durch die Anzahl der Zylinder entspricht, dann liefert die Messung unabhängig von der Lage von Beginn und Ende des Meßintervalles bezüglich der Kurbelwellenstellung in jedem Fall den Mittelwert der Drehzahl, so daß zwar nach wie vor die Dauer des Meßintervalles in fester Beziehung zur Dauer für eine volle Umdrehung der Kurbelwelle stehen muß, jedoch Beginn und Ende des Meßintervalles mit der Kurbelwellendrehung nicht phasenstarr synchronisiert zu sein brauchen.

Eine Vorrichtung zum Ausführen des Verfahrens ist in Fig. 2 dargestellt, wobei auf der Kurbelwelle oder dem mit dieser verbundenen Schwungrad 1 zwei Markierungen 2 und 3 vorgesehen sind, welche mit zwei im selben Winkelabstand ortsfest angeordneten Gebern 4 und 5 zusammenwirken. Der Beginn eines Meßintervalles wird durch Koinzidenz der Signale von beiden Gebern 4 und 5 mittels eines UND-Gatters 6 festgelegt, dessen Ausgang mit dem Setzeingang eines Flip-Flops 7 verbunden ist, wobei die Signalleitung des Gebers 5 allein mit dem Rückstelleingang des Flip-Flops 7 in Verbindung steht. Wenn die Markierung 3 am Geber 4 vorbeiläuft, verhindert das UND-Gatter 6 die Weiterleitung eines Signals an das Flip-Flop 7. Wenn bei dem in Fig. 2 dargestellten Zustand gleichzeitig die Markierung 3 am Geber 5 und die Markierung 2 am Geber 4 vorbeiläuft, gelangt über das UND-Gatter 6 ein Signal an den Setzeingang des Flip-Flops 7 (falls der Setzeingang des Flip-Flops 7 keine Priorität vor dem Rückstelleingang hat, muß durch weitere Logikschaltungen für diesen Fall die Weiterleitung des vom Geber 5 gelieferten Signals an den Rückstelleingang des Flip-Flops 7 verhindert werden). Wenn schließlich die Markierung 2 am Geber 5 vorbeiläuft, wird dadurch dem Rückstelleingang des Flip-Flops 7 das Ende des Meßintervalles signalisiert.

Die Auswertung der solcherart ermittelten Intervallänge erfolgt mit Hilfe eines UND-Gatters 8, über welches je nach dem Zustand des Flip-Flops 7 ein Taktsignal weitergeleitet wird oder nicht. Mittels eines nachgeschalteten Reziprokwertbildners 9 wird ein der Drehzahl proportionales (analoges oder digitales) Signal für Regelungszwecke erhalten.

Je nach der Zylinderzahl und dem Arbeitsverfahren (Zweitakt- oder Viertakt-Verfahren) der Brennkraftmaschine können am Schwungrad 1 auch mehrere Paare von Markierungen 2, 3 vorgesehen sein.

Fig. 3 zeigt eine Ausführungsform der Vorrichtung, bei welcher das Schwungrad 1 mehrere in gleichen Abständen voneinander angeordnete Markierungen 2 aufweist. Zum Abfühlen dieser Markierungen dient der Geber 4, der jeweils den Beginn eines Meßintervalles signalisiert. Ein weiterer Geber 10 wirkt mit den am Umfang des Schwungrades 1 vorhandenen Zähnen eines Zahnkranzes 11 zusammen, welcher für den Eingriff des Anlasserritzels vorgesehen ist. Der Geber 10 ist an den Eingang eines Modulo M-Zählers 12 angeschlossen, welcher vom Signal des Gebers 4 aktivierbar ist und dann jeweils nach dem Abzählen von M Zähnen ein Signal abgibt. Dadurch kann wieder ein Flip-Flop 7 gesetzt und zurückgestellt werden, an welches sich eine weitere Schaltung, wie in Fig. 2 gezeigt, anschließen kann. Bei einem Viertaktmotor mit der Zylinderanzahl Y und einem Z Zähne aufweisenden Zahnkranz 11 am Schwungrad 1 muß die Bedingung $M < Z/(Y/2)$ eingehalten werden.

Für eine Anordnung ähnlicher Art, wie in Fig. 3 gezeigt, wäre es auch möglich, die Markierungen 2 am Schwungrad 1 und den zugehörigen Geber 4 entfallen zu lassen und einen Modulo M-Zähler 12 mit $M = Z/(Y/2)$ zu verwenden, wobei allerdings Z einen entsprechenden Wert haben müßte, damit M eine ganze Zahl wird.

**Patentansprüche**

1. Verfahren zur Messung der Drehzahl von Brennkraftmaschinen, insbesondere von mehrzylindrigen Dieselmotoren, bei welchem die Drehzahl durch einen Geber (4) von der Kurbelwelle oder einem mit dieser verbundenen Teil (1) abgegriffen wird, für die nachfolgende elektronische Regelung von Einflußgrößen, wie z.B. Brennstoffmengenverstellung oder Einspritzzeitpunktverstellung, in Abhängigkeit von der Drehzahl, dadurch gekennzeichnet, daß die Drehzahl über den gesamten Winkelbereich desjenigen von der Kurbelwelle durchlaufenen Winkels bestimmt wird, welcher dem Quotienten des für einen vollständigen Arbeitszyklus eines Zylinders durchlaufenen Winkels durch die Anzahl der Zylinder entspricht.

2. Verfahren nach Anspruch 1, dadurch gekennzeichnet, daß die Messung nach einem beliebigen Intervall bei einer beliebigen Kurbelwellenstellung beginnend wiederholt wird.

3. Vorrichtung zur Durchführung des Verfahrens nach Anspruch 1 oder 2, mit einem elektronischen Regler zur Verstellung von Betriebsgrößen in Abhängigkeit von der Drehzahl, mit wenigstens einem Geber (4) für die Aufnahme der Drehzahl und elektrischen Leitungen zwischen Geber und elektronischem Regler, wobei über den Umfang der Kurbelwelle oder eines mit dieser verbundenen Teiles (1) eine gerade Anzahl mit dem Geber (4) zusammenwirkender Markierungen (2, 3) vorgesehen ist, dadurch gekennzeichnet, daß der Winkelabstand je zweier einander zugeordneter Markierungen (2, 3) voneinander gleich dem sich aus dem Quotienten des für einen vollständigen Arbeitszyklus eines Zylinders durchlaufenen Winkels durch die Anzahl der Zylinder ergebenden Winkel ist.

4. Vorrichtung nach Anspruch 3, dadurch gekennzeichnet, daß wenigstens zwei Geber (4, 5) im gleichen Winkelabstand wie zwei einander zugeordnete Markierungen (2, 3) über den Umfang der Kurbelwelle verteilt angeordnet sind.

**Claims**

1. Method for measuring the speed of internal-combustion engines, particularly of multiple-cylinder diesel engines, in which the engine speed is sensed from the crankshaft, or from a member (1) connected therewith, by means of a sensor (4), for the subsequent electronic control of influencing variables, such as quantity control of fuel to be injected or injection timing, in dependence of engine speed, characterized in that the engine speed is determined over the full range of that angle through which the crankshaft has passed which corresponds to the quotient of the angle to be passed through by the crankshaft for a complete cycle of one cylinder divided by the number of cylinders.

2. Method as claimed in claim 1, characterized in that the measuring step is repeated after an arbitrary interval starting at any crankshaft position.

3. Apparatus for carrying out the method of claim 1 or 2, comprising an electronic control unit for varying operational variables in dependence of rpm, at least one sensor (4) for sensing rpm, and electric leads between sensor and electronic control unit, with an even number of indicia (2, 3) cooperating with the sensor (4) being provided along the circumference of the crankshaft or of a member (1) connected therewith, characterized in that the angular distance between two adjoined indicia (2, 3) each is equal to the angle which corresponds to the quotient of the angle to be passed through for a complete cycle of one cylinder divided by the number of cylinders.

4. Apparatus as claimed in claim 3, characterized in that at least two sensors (4, 5) are arranged distributed over the circumference of the crankshaft in like angular distances as two indicia (2, 3) adjoined to each other.

**Revendications**

1. Procédé pour mesurer la vitesse de rotation de moteur à combustion interne, notamment de moteurs Diesel à plusieurs cylindres, selon lequel la vitesse de rotation est prélevée par un capteur (4) sur le vilebrequin ou sur une partie (1) reliée à ce dernier, pour réaliser la régulation électronique ultérieure de paramètres, comme par exemple le réglage de la quantité de carburant ou le réglage de l'instant de l'injection, en fonction de la vitesse de rotation, caractérisé en ce que la vitesse de rotation est déterminée sur l'ensemble de la plage angulaire couverte par l'angle parcouru par le vilebrequin et qui correspond au quotient de l'angle parcouru pendant un cycle complet de travail d'un cylindre par le nombre de cylindres.

2. Procédé selon la revendication 1, caractérisé en ce que la mesure est répétée au bout d'un intervalle de temps quelconque, en commençant dans n'importe quelle position du vilebrequin.

3. Dispositif pour la mise en oeuvre du procédé selon la revendication 1 ou 2, comportant un régulateur électronique servant à régler des grandeurs de fonctionnement en fonction de la vitesse de rotation et comportant au moins un capteur (4) servant à enregistrer la vitesse de rotation et des conducteurs électriques disposés entre le capteur et le régulateur électronique, un nombre pair de repères (2, 3) coopérant avec le capteur (4) étant prévus sur le pourtour du vilebrequin ou d'une partie (1) reliée à ce dernier, caractérisé en ce que l'écart angulaire entre deux repères (2, 3) réciproquement associés est égal à l'angle obtenu en formant le quotient de l'angle parcouru lors d'un cycle de travail complet d'un cylindre, par le nombre de cylindres.

4. Dispositif salon la revendication 3, caractérisé en ce qu'au moins deux capteurs (4, 5) sont disposés en étant répartis sur le pourtour du vilebrequin, et ce avec le même écart angulaire que deux repères (2, 3) réciproquement associés.

FIG. 1

Takt

FIG. 2

mod M

FIG. 3